# EUROPEAN PATENT SPECIFICATION

(11) **EP 2 511 237 B1**
(45) Date of publication and mention of the grant of the patent: **02.11.2016**
(21) Application number: 10860590.8
(22) Date of filing: 07.12.2010
(51) Int. Cl.: C01G 15/00, C01G 3/00, C01B 19/00, B82Y 30/00

(54) **CHALCOGEN COMPOUND POWDER, CHALCOGEN COMPOUND PASTE, CHALCOGEN COMPOUND POWDER MANUFACTURING METHOD, CHALCOGEN COMPOUND PASTE MANUFACTURING METHOD AND CHALCOGEN COMPOUND THIN FILM MANUFACTURING METHOD**
CHALCOGENVERBINDUNGSPULVER, CHALCOGENVERBINDUNGSPASTE, VERFAHREN ZUR HERSTELLUNG DES CHALCOGENVERBINDUNGSPULVERS, VERFAHREN ZUR HERSTELLUNG DER CHALCOGENVERBINDUNGSPASTE UND VERFAHREN ZUR HERSTELLUNG EINER CHALCOGENVERBINDUNGSDÜNNSCHICHT
POUDRE DE COMPOSÉ CHALCOGÈNE, PÂTE DE COMPOSÉ CHALCOGÈNE, PROCÉDÉ DE FABRICATION DE POUDRE DE COMPOSÉ CHALCOGÈNE, PROCÉDÉ DE FABRICATION DE PÂTE DE COMPOSÉ CHALCOGÈNE ET PROCÉDÉ DE FABRICATION DE FILM MINCE DE COMPOSÉ CHALCOGÈNE

(43) Date of publication of application: 17.10.2012
(73) Proprietor: Dowa Holdings Co., Ltd., Tokyo 101 0021 (JP)
(72) Inventor: ISHIKAWA Yuichi, Tokyo 101-0021 (JP); FUJINO Takatoshi, Tokyo 101-0021 (JP)
(74) Representative: Müller-Boré & Partner Patentanwälte PartG mbB
(86) International application number: PCT/JP2010/072318
(87) International publication number: WO 2012/077242

(56) References cited:
- WO-A1-2009/041758
- WO-A1-2011/021546
- JP-A- 3 257 005
- JP-A- 2007 521 221
- JP-A- 2010 067 727
- US-A1- 2010 003 187
- SURYANARAYANA C ET AL: "CONSOLIDATION OF MECHANICALLY ALLOYED CU-IN-GA-SE POWDERS", JOURNAL OF MATERIALS SCIENCE LETTERS, CHAPMAN AND HALL LTD. LONDON, GB, vol. 20, no. 24, 15 December 2001 (2001-12-15), pages 2179-2181, XP001089060, ISSN: 0261-8028, DOI: 10.1023/A:1017916530073
- DATABASE WPI Week 201033 Thomson Scientific, London, GB; AN 2010-F18739 XP002701232, & JP 2010 105887 A (DOWA ELECTRONICS CO LTD) 13 May 2010 (2010-05-13)

## Description

The present invention relates to chalcogen compound powder containing a chalcogen-based element used to form an optical absorption layer of a thin film solar cell, a fluorescent substance, or an electrode film for a Peltier device, or to do the like, chalcogen compound paste, a process for producing chalcogen compound powder, a process for producing chalcogen compound paste, and a process for producing a thin film of chalcogen compound, and more particularly to chalcogen compound powder low in cost and danger and, further, capable of reducing electrical resistance of a film formed by coating and calcination of chalcogen compound paste using the chalcogen compound powder, chalcogen compound paste, a process for producing chalcogen compound powder, a process for producing chalcogen compound paste, and a process for producing a thin film of chalcogen compound.

Among chalcogen compound powders containing a chalcogen-base element, nanoparticles (nanocrystals) of a Cu-In-(Ga)-Se-(S) compound containing copper (Cu), indium (In) and selenium (Se) are expected to be used to form a thin film in production of a solar cell. A method for forming a thin film may involve coating and calcination of a paste containing nanoparticles (nanocrystals) of a Cu-In-(Ga)-Se-(S) compound on a substrate. As used herein, (Ga) and (S) in the expression "Cu-In-(Ga)-Se-(S)" indicate that gallium (Ga) and/or sulfur (S) may be excluded, and (Ga) in the expression "Cu-In-(Ga)-Se" indicates that gallium (Ga) may be excluded. (The same goes for the following description.)

Known as a method for obtaining powder of a Cu-In-(Ga)-Se-(S) compound is a method that involves pulverizing an ingot obtained by casting a molten Cu-In-Ga-Se-based quaternary alloy, thereby producing powder of a Cu-In-Ga-Se-based quaternary alloy. (For example, refer to patent document 1.)

Also, methods for producing powder of a Cu-In-(Ga)-Se compound include a method in which Cu, In, Se and the like as raw materials undergo a chemical process by a machine using a planetary ball mill thereby to yield the powder.

Also, as a method for producing Cu-In-(Ga)-Se compound powder, the inventors have developed a method in which composite metal hydroxide powder and selenium (Se) are heated in a high boiling point organic solvent thereby to yield the compound powder, the application of which has been filed. (Refer to patent document 2.)

Further, as a method for producing powder of a Cu-In-(Ga)-Se compound, the inventors have developed a method that involves adding a metal compound and Se (and/or S) to a solvent and heating the solvent, the application of which has been filed. According to this production method, nanoparticles (nanocrystals) of the Cu-In-(Ga)-Se compound, having high crystallinity and an average particle diameter of 80 nm or less, can be obtained. (The specification of Japanese Patent Application No. 2009-141322.)

US 2010/0003187 A1 discloses a method for synthesizing a chalcogenide nanoparticle, comprising reacting a metal component with a chalcogen precursor in the presence of an organic solvent having at least one of a boiling temperature equal to 220°C or above and a chain length of about 12 carbon atoms or above.

WO 2009/041758 A1 discloses a method for preparing a chalcopyrite-type compound represented by the formula CuM¹M²₂, wherein M¹ is one or more selected from among group III elements, and M² is one or more selected from among group VI elements, said method comprising the steps of a) mixing a Cu salt, a group III element salt and a group VI element powder with a chelating agent, an ionic liquid or a chelating agent/ionic liquid mixture to prepare a mixture solution; and b) introducing the mixture solution into a reactor and heating the introduced mixture solution by microwave irradiation.

J. Mat. Sci. Let. 20, 2001, pp. 2179-2181 relates to an investigation on the consolidation of a mechanically alloyed CuIn_{0.7}Ga_{0.3}Se₂ powder.

JP 2010-105887 A discloses a method for producing a nanoparticle of specific chalcogen compounds in which a chalcogen source containing one or more kinds of a hydroxide, an oxide and an oxalate and one or more kinds of Se, Te and S are added into a reducing solvent and heated to 200°C or higher.
Patent Literature 1 : Japanese Patent Publication No. 2008-163367
Patent Literature 2 : Japanese Patent Publication No. 2010-132521

A particle diameter of the powder of the Cu-In-Ga-Se-based quaternary alloy obtained by the above-described method of the patent document 1 is of the order of 100 mesh under, and powder having an average particle diameter of a few micrometers or less cannot be obtained. Also, powder having an average particle diameter of 0.5 µm or less cannot be obtained with the method in which the raw materials undergo the mechanochemical process by the machine using the planetary ball mill thereby to yield the powder.

As mentioned previously, the powder of the Cu-In-(Ga)-Se-(S) compound is formed into paste, a coating of which is then applied to the substrate and calcined thereby to enable formation of the thin film for use in the solar cell. In the paste containing the Cu-In-(Ga)-Se-(S) compound powder having an average particle diameter in excess of 0.5 µm, however, sintering of particles does not proceed well at a temperature of the order of 600°C of heat treatment for calcination, due to the large average particle diameter. This results in a film in which many voids are present, thus leading to the problems of low electrical conductivity, a short circuit in the solar cell due to the presence of voids, or the like.

Also, chalcogen compound powder obtained by the method disclosed in the patent literature 2 has an average particle diameter of 100 nm or less, which is very small, but contains 5% or more by mass of organic matter. Thus, a thin film obtained by calcination a paste of the powder is found to be low in electrical conductivity (high in resistance). The thin film for the solar cell is required to have sufficiently low electrical resistance, and it is necessary to solve this problem.

Further, the method disclosed in the specification of Japanese Patent Application No. 2009-141322 requires using an organic solvent for synthesis, the powder obtained by the method has an organic matter content of 0.3% or more, and even this poses the problem that the electrical resistance is not low sufficiently for the thin film for the solar cell. Specifically, chalcogen compound powder having a composition of CuInSe₂ having an organic matter content of 0.3% or more obtained is used to prepare paste under the same conditions as formation conditions for chalcogen compound paste using specimens 4 and 6 of Example 1 to be described later (specimens 4 and 6 of Comparative example 1). Thereafter, a coating of the paste is applied, and then is heated, thereby forming a thin film. In this case, the thin film of chalcogen compound has a sheet resistivity of 800 Ω/□ (Ω/sq) or more, which is in a situation where a further reduction is desired.

Thus, the conventional methods cannot obtain Cu-In-(Ga)-Se compound powder having an average particle diameter of less than 0.5 µm and an organic matter (carbon (C)) content of 0.2% or less by mass in the powder.

The present invention has been made in consideration for the foregoing problems. Firstly, the problems are solved by providing chalcogen compound powder represented as a general formula: CuₐIn_{b}Ga_{1-b}Se_{c} (where 0.65 ≤ a ≤ 1.2, 0 < b ≤ 1, and 1.9 ≤ c ≤ 2.4), and having an average particle diameter (D50) of from 5 nm inclusive to 0.5 µm exclusive and a carbon content of 0.2% or less by mass.

Secondly, the problems are solved by providing chalcogen compound paste containing the chalcogen compound powder and a disperse medium.

Thirdly, the problems are solved by providing a process, including: a step of forming a chalcogen compound, by heating a metal source containing copper and indium, having an average primary particle diameter of 0.3 µm or less, and one or more kinds selected from a group consisting of selenium and selenium compounds to a temperature of not less than 200°C nor more than 400°C in a reducing gas; and a step of pulverizing the chalcogen compound.

Fourthly, the problems are solved by providing a process, including: a step of obtaining chalcogen compound powder by the above-described process; and a step of mixing together the chalcogen compound powder and a disperse medium.

Fifthly, the problems are solved by providing a process, including a step of applying, drying and thereafter calcining a coating of the chalcogen compound paste obtained by the above-described process.

Firstly, according to an embodiment of the present invention, chalcogen compound (Cu-In-(Ga)-Se compound) powder and chalcogen compound paste having an average particle diameter (D50) of less than 0.5 µm and an organic matter (C) content of 0.2% or less in the powder can be provided.

A thin film of chalcogen compound having high electrical conductivity (low electrical resistance) and few voids can be obtained by coating and calcination of the paste containing the chalcogen compound powder.

Secondly, according to the production process of the embodiment, a high-quality thin film of chalcogen compound suitable for use in a solar cell can be obtained by the low-cost and low-risk approach of applying and calcining a coating of the paste containing the chalcogen compound powder.
Figs. 1A to 1C are flowcharts of assistance in explaining production processes of an embodiment of the present invention.
Fig. 2 shows a TEM photograph of reaction-processed powder in Example 1 of the present invention.
Fig. 3 shows results of evaluation of the state of specimens according to Example 1 of the present invention.
Fig. 4 shows a particle size distribution according to Example 1 of the present invention.
Fig. 5 shows results of fluorescent X-ray analysis of chalcogen compound powder according to Example 1 of the present invention.
Fig. 6 is a graph showing results of X-ray diffraction of the chalcogen compound powder according to Example 1 of the present invention.
Fig. 7 shows results of evaluation of the state of specimens according to Comparative example 1 of the present invention.
Fig. 8 is a graph showing results of X-ray diffraction of chalcogen compound powder according to Comparative example 1 of the present invention.
Fig. 9 shows results of measurement of carbon content in Example 1 and Comparative example 1 of the present invention.
Fig. 10 shows results of measurement of sheet resistivity of thin films of chalcogen compound of Example 1 and Comparative example 1 of the present invention.
Fig. 11 shows results of evaluation of the carbon content in Example 1 and Comparative example 1 of the present invention, by SEM-EDS.
Figs. 12A and 12B show SEM photographs of cross sections of the thin films of chalcogen compound of Example 1 and Comparative example 1 of the present invention.
Fig. 13 shows results of measurement of Examples 2 to 6 and Comparative examples 2 and 3 of the present invention.

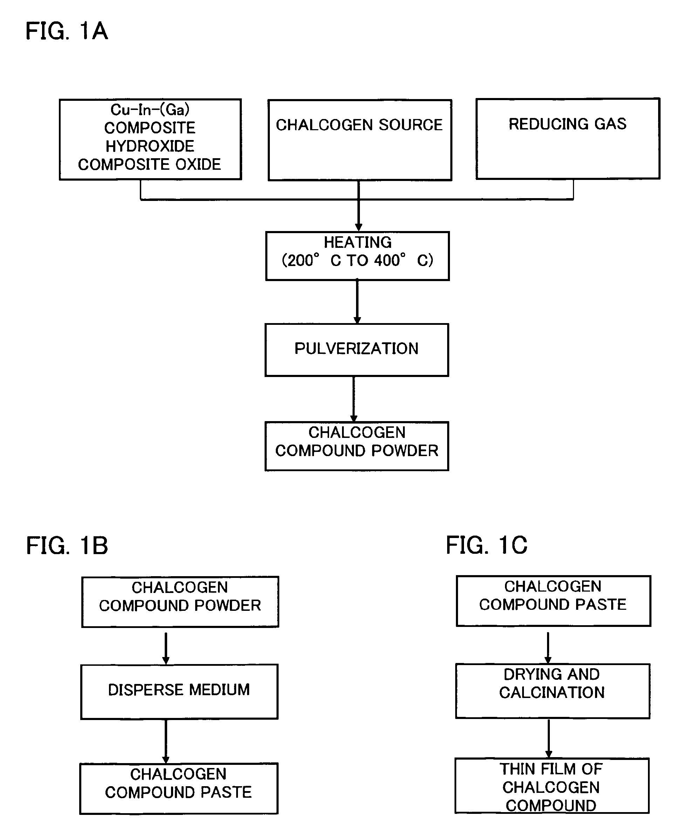

An embodiment of the present invention will be described in detail below with reference to Figs. 1A to 13.

Chalcogen compound powder of the embodiment is a compound containing copper (Cu), indium (In) and selenium (Se), represented as a general formula: CuₐIn_{b}Ga_{1-b}Se_{c} (where 0.65 ≤ a ≤ 1.2, 0 < b ≤ 1, and 1.9 ≤ c ≤ 2.4), and having an average particle diameter (D50) of less than 0.5 µm and a carbon (C) content of 0.2% or less in the powder. As used herein, (Ga) in the expression "Cu-In-(Ga)-Se" indicates that gallium (Ga) may be excluded. (The same goes for the following description.) Also, it is preferable that the value of b be equal to or more than 0.5. If the value of b is less than 0.5, a band gap of the chalcogen compound becomes large, and thus, the use of the chalcogen compound powder for production of a solar cell may possibly lead to a reduction in conversion efficiency of the solar cell.

Also, the chalcogen compound of the embodiment is the compound having one or more kinds of metallic elements, and one or more kinds of elements selected from selenium (Se) and sulfur (S), as constituent elements.

Figs. 1A to 1C are flowcharts of assistance in explaining examples of production processes for obtaining chalcogen compound powder, chalcogen compound paste and a thin film of chalcogen compound of the embodiment.

Firstly, a process for producing chalcogen compound powder of the embodiment will be described with reference to Fig. 1A. The process for producing the chalcogen compound powder of the embodiment includes a step of forming a chalcogen compound by heating a metal source containing copper and indium, and a chalcogen source (one or more kinds selected from a group consisting of selenium and selenium compounds) to a temperature of 200°C to 400°C inclusive in a reducing gas, and a step of pulverizing the chalcogen compound obtained by the step of forming.

This process can obtain the chalcogen compound powder (Cu-In-(Ga)-Se compound powder) having an average particle diameter (D50) of less than 0.5 µm and a carbon content of 0.2% or less in the powder.

The metal source as raw material is powder of any one of a composite hydroxide of copper and indium and a composite hydroxide of copper, indium and gallium. The composite hydroxide powder can be formed by dissolving salt of metal that makes up the composite hydroxide, in a solvent, and adding alkali to the solvent. It is required that the composite hydroxide powder have an average primary particle diameter of 0.3 µm or less, in order to obtain the Cu-In-(Ga)-Se compound powder having an average particle diameter (D50) of less than 0.5 µm. Incidentally, a secondary particle diameter may be large.

The metal source is any one of metal hydroxide powder, an oxide, and a mixture of a metal hydroxide and an oxide. Although powder of a hydroxide may be heated (dehydrated) to form powder of an oxide or to form the powder of the hydroxide, only part of which is in the form of an oxide, the hydroxide is more preferable since reduction takes place at a subsequent step.

Then, when a mixture of metal salts (copper salt and indium salt, and gallium salt as needed) is used as starting material, the metal salts are dissolved in a solvent, and alkali is added to precipitate a composite hydroxide of metals contained in the metal salts, and thereafter, decantation, centrifugal sedimentation, filtration or the like is performed, and rinsing takes place as needed, and drying is done, whereby metal compound powder of the composite hydroxide is obtained. Alternatively, a composite hydroxide is oxidized (dehydrated) to yield metal compound powder of a composite oxide. The metal salts may be dissolved as the mixture in the solvent, or the metal salts may be dissolved in sequence in the solvent without being mixed.

In the following example, description will be given taking an instance where metal salts are used as starting materials to form a composite hydroxide or a composite oxide and thereby yield a chalcogen compound; however, metal compound powder of a composite hydroxide or metal compound powder of a composite oxide may be used as starting material. Also, gallium salt may be added as metal salt to obtain a chalcogen compound containing Ga.

First, Cu salt and In salt are dissolved in a solvent. Water is available for use as the solvent. After that, alkali is added thereby to induce neutralization and form a metal hydroxide. Specifically, the metal hydroxide is precipitated by an ammonia solution, sodium hydroxide, potassium hydroxide, or an alkaline organic compound having an amino group.

At this time, since the chalcogen compound to be obtained is the compound containing plural metallic elements, construction of the metal salts is such that the metal salts of at least Cu and In are used for formation of the metal hydroxide in order to obtain a precipitate of the metal hydroxide having the same metallic element ratio as that of the chalcogen compound. Specifically, for example for production of CuInSe₂, the copper salt and the indium salt are used as raw materials to form the metal hydroxide so that an atomic ratio between Cu and In stands at 1 : 1. Also, for example for production of CuIn_{0.8}Ga_{0.2}Se₂, the copper salt, the indium salt and the gallium salt are used as raw materials to form the metal hydroxide so that the atomic ratio of Cu, In and Ga stands at 1 : 0.8 : 0.2.

Cleaning is performed on a slurry containing these metal hydroxides by repeating an operation that involves removing once the solvent containing a reaction by-product by a centrifugal hydroextractor, a high-speed centrifugal settler tube, a filter press, a Nutsche or the like, redispersing the slurry in a solvent such as water or ethanol, and further removing the solvent. Desirably, the cleaning is repeated until electrical conductivity of a residue (filtrate) reaches 10⁻¹ Sm⁻¹ or less. Alkali metal in particular, if remaining, does not volatilize and hence remains as an impurity element, which in turn can possibly become a problem.

Reaction impurities can be removed by performing the cleaning. In the embodiment, for neutralization, it is preferable that an end point of pH be alkaline. The pH is not particularly limited but may be equal to or more than 10, for example. Also, lower electrical conductivity of filtrate by rinsing is better; however, when the pH gets closer to neutral, the metal hydroxide in itself is eluted and hence changes in composition, and therefore, it is desirable that the pH of the filtrate be maintained at 7.5 or more.

Any one of a hydroxide and an oxide obtained by a method given below from cake containing the solvent obtained by solid-liquid separation of the hydroxide after the cleaning, or a mixture of these can be used as a metal source of a chalcogenization reaction to be described later.

Powder of a composite hydroxide (metal compound powder) can be obtained by drying the metal hydroxide (the cake) obtained by the solid-liquid separation after the cleaning, for example at a temperature of 70°C to 90°C under an atmosphere of air. At this time, drying temperature is not particularly limited, and vacuum drying may be adopted to reduce the drying temperature. Also, the drying temperature may be equal to or higher than 200°C. Thereby, the composite hydroxide powder having an average primary particle diameter of 0.3 µm or less can be obtained.

Also, the composite hydroxide may be heated and oxidized to form powder of a composite oxide (metal compound powder), and, in this case, the composite hydroxide may be partially or wholly formed into the oxide.

Description will be given below taking an instance where composite hydroxide powder (metal hydroxide powder) is used.

A chalcogen compound (a Cu-In-(Ga)-Se compound) is obtained by mixing the composite hydroxide powder small in average primary particle diameter (0.3 µm or less) with solid Se, and heating it to 220°C or more in a reducing gas.

Too high a heating temperature causes sintering to proceed, and thus, even with pulverization, the average particle diameter may possibly remain large, and therefore, the heating temperature is equal to or lower than preferably 400°C, or more preferably 350°C or still more preferably 300°C in order for the pulverization to facilitate obtaining Cu-In-(Ga)-Se compound powder having a desired average particle diameter. Preferably, the solid Se is powder having an average particle diameter of 10 µm or less. With an average particle diameter of 10 µm or less, chalcogen compound powder of uniform composition can be more easily obtained. Hydrogen selenide (H₂Se), for example, may be added as a selenium compound to the reducing gas.

The average primary particle diameter of the composite hydroxide powder, when it is smaller, is advantageous in obtaining the Cu-In-(Ga)-Se compound powder small in average particle diameter, and therefore, the average primary particle diameter is more preferably equal to or less than 0.1 µm, or still more preferably equal to or less than 50 nm. The average primary particle diameter has no particular lower limit but has difficulty in being equal to or less than 1 nm. The average primary particle diameter is determined by measuring particle diameters of 100 particles or more in a TEM or SEM photograph of the composite hydroxide powder, and calculating an average value of the particle diameters. The above description of the average primary particle diameter is the same as that for an instance where a composite oxide is contained in the metal source.

The average primary particle diameter of the composite hydroxide powder can be adjusted by changing the following conditions at the time of formation of the composite hydroxide. The average primary particle diameter tends to become larger as the concentration of Cu salt becomes higher, the average primary particle diameter tends to become large when a liquid is poorly stirred at the time of addition of alkali, and the average primary particle diameter tends to become large when the time required for the addition of alkali is long.

By pulverizing the chalcogen compound, the Cu-In-(Ga)-Se compound powder having an average particle diameter (D50) of less than 0.5 µm and an organic matter (carbon) content of less than 0.2% in the powder can be obtained.

A hydrogen gas, a mixed gas of hydrogen and an inert gas, or a mixed gas of these and selenium hydride (H₂Se) may be used as the reducing gas. Mixing selenium hydride with the reducing gas enables eliminating a need for Se (the Se compound) to be mixed with the composite hydroxide powder; however, Se, when contained in gaseous form in the reducing gas, increases in loss, and therefore, it is preferable that the metal hydroxide and the solid Se (the Se compound) be mixed. A flow rate of the reducing gas may be set as the hydrogen gas to 0.002 L/min to 0.2 L/min (in terms of 0°C) per 1 g of the metal compound to be processed.

Although a pulverization method is not particularly limited, a ball mill, an oscillating mill or the like is preferably available. In the production process of the embodiment, an object to be pulverized is in such a form that only some of particles having an average primary particle diameter of 0.5 µm or less are sintered together, and thus, the existing ball mill or oscillating mill is used for processing thereby to enable obtaining the Cu-In-(Ga)-Se compound powder having an average particle diameter (D50) of less than 0.5 µm. Desirably, the average particle diameter (D50) of the Cu-In-(Ga)-Se compound powder is smaller, and is equal to or less than preferably 0.3 µm, or more preferably 0.2 µm, or still more preferably 0.1 µm, from the viewpoint of making it possible to obtain a thin film of chalcogen compound having high electrical conductivity and good quality, even if calcination temperature is low at the time of formation of the thin film of chalcogen compound through the pasting, coating and calcination of the obtained compound powder. Also, the production process of the present application has difficulty in obtaining particles having an average particle diameter (D50) of less than 5 nm. The average particle diameter (D50) tends to become smaller as a processing time for the pulverization becomes longer, and the average particle diameter (D50) can be changed by changing the processing time for the pulverization.

The chalcogen compound powder obtained by the embodiment has an X-ray diffraction peak intensity ratio of 5 or more (that is, a value obtained by dividing a peak height of the highest peak intensity of a target chalcogen compound by a peak height of the highest peak intensity of other substances), and contains a high concentration of particles made up of crystals having a target composition. The chalcogen compound powder (represented as the general formula: CuₐIn_{b}Ga_{1-b}Se_{c} (where 0.65 ≤ a ≤ 1.2, 0 < b ≤ 1, and 1.9 ≤ c ≤ 2.4)) is used to grow a film and thereby permit expecting an improvement in characteristics of the grown film.

Also, preferably, the amount of the chalcogen source added at the time of chalcogenization reaction is such that, if a solid chalcogen source is used, an amount 1 to 1.5 times an equivalent is added, because too much addition is uneconomical. As used herein, the equivalent refers to the amount of the chalcogen source containing 2.1 moles of Se relative to 1 mole of Cu contained in the metal source of the chalcogenization reaction, specifically for example for production of chalcogen compound powder of CuInSe_{2.1}.

In the embodiment, hereinafter, the phrase "excessive addition" means the addition of an amount exceeding 1 time the equivalent and not exceeding 1.5 times the equivalent.

Next, chalcogen compound paste and a process for producing the same of the embodiment will be described with reference to Figs. 1 Band 1C. Further, description will be given with regard to an evaluation method for a thin film of chalcogen compound obtained by coating and calcination of the paste.

As shown in Fig. 1B, the chalcogen compound powder prepared as described above is mixed with a disperse medium. A liquid such as alcohol (including polyhydric alcohol) may be used as the disperse medium, and C1 to C3 alcohols are preferable. Included are, for example, methyl alcohol, ethyl alcohol, and isopropyl alcohol. Also, it is preferable that the content of the chalcogen compound powder in the chalcogen compound paste lie between 20% and 90% inclusive by mass. A content of less than 20% by mass may possibly cause a problem with patterning at the time of coating, while a content of more than 90% by mass may possibly lead to the paste having too high a viscosity. While being stirred, the chalcogen compound powder and the disperse medium are mixed together to form the chalcogen compound paste. Incidentally, the chalcogen compound paste of the embodiment refers to that in a state in which the chalcogen compound powder is dispersed in the disperse medium.

Then, as shown in Fig. 1C, a coating of the obtained chalcogen compound paste is applied and dried. After that, calcination takes place for example in an atmosphere of argon (Ar) thereby to form a thin film of chalcogen compound. In the embodiment, sheet resistivity of the thin film of chalcogen compound obtained by coating and calcination of the chalcogen compound paste using isopropyl alcohol as the disperse medium is measured.

For the thin film of chalcogen compound for use in the solar cell or the like, it is desired that the sheet resistivity of the thin film of chalcogen compound be low. Specifically, it is preferable that the sheet resistivity be equal to or less than 500 Ω/□ (Ω/sq).

The thin film of chalcogen compound using the chalcogen compound powder obtained by the conventional methods (the methods disclosed in the prior patent documents) has the problem of having high sheet resistivity (e.g. 10 MΩ/□ or more), because of having a high content of organic matter (e.g. carbon (C)) in dry powder containing the chalcogen compound powder.

There is a low content of organic matter in dry powder containing the chalcogen compound powder prepared by the embodiment, and thus, when the chalcogen compound powder is used to form the thin film of chalcogen compound, the sheet resistivity can be reduced to less than 500 Ω/□.

Incidentally, in the embodiment, description is given using the Cu-In-(Ga)-Se compound powder by way of example as the chalcogen compound powder; however, the embodiment can likewise be carried out with Cu-In-(Ga)-Se-(S) compound powder. As used herein, (Ga) and (S) in the expression "Cu-In-(Ga)-Se-(S)" indicate that gallium (Ga) and/or sulfur (S) may be excluded. (The same goes for the following description.)

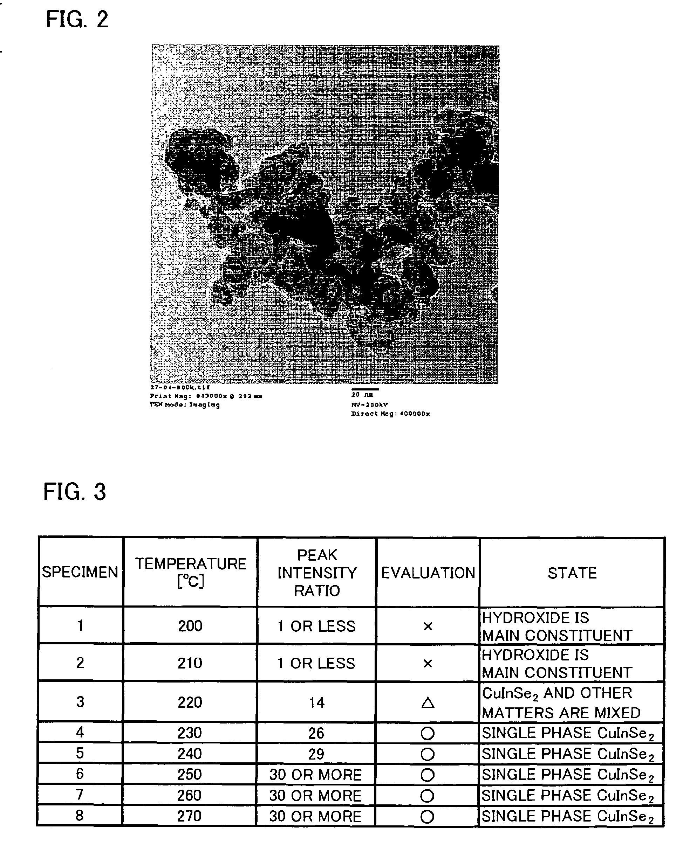

Examples will be given in detail below with reference to Figs. 2 to 13. Incidentally, in the following examples, even if there is a difference between an element composition ratio of elements of an obtained chalcogen compound and an element composition ratio intended to be formed, a molecular formula for the element composition ratio intended to be formed may be used for representation, provided that the difference is equal to or less than 5%.

### EXAMPLE 1

To synthesize CuInSe₂ particles, a solution containing 0.1 mol of copper nitrate and 0.1 mol of indium nitrate dissolved in 500 mL of pure water was poured into a 1000 mL beaker. Subsequently, with the solution in the beaker stirred with a blade of 5 cm in diameter at 300 rpm, 40 g/L of an aqueous solution of sodium hydroxide was dripped until the solution reached pH 7.8, thereby to form a precipitate as a hydroxide and obtain a composite hydroxide of copper and indium. In this state, the composite hydroxide was allowed to stand for 30 minutes, and thereafter, solid-liquid separation was performed by a Nutsche. At this time, extracted cake of the hydroxide of copper and indium was dispersed again in pure water, and the solid-liquid separation was performed by a Nutsche in the same manner. Above-mentioned process was repeated until conductivity of filtrate reached 10⁻³ Sm⁻¹ or less. Part of the cake taken out was dried by heat (at 80°C for 12 hours in an atmosphere of air) thereby to yield composite hydroxide powder. As a result of determining an average primary particle diameter by measuring particle diameters of 100 primary particles in a TEM (Transmission Electron Microscope) photograph of the composite hydroxide powder and calculating an average value of the primary particle diameters, it has been shown that the average primary particle diameter is equal to or less than 50 nm. Also, a water content in the cake was determined from mass before and after drying by heat. The obtained water content in the cake was 73% by mass.

Then, 5 g of the composite hydroxide after the drying was taken out. Se powder (having an average particle diameter of 1 µm) in an amount such that an atomic ratio of Se to Cu contained in the composite hydroxide stands at 2.4 was prepared by being weighed. Then, 5 g of the composite hydroxide and the weighed Se powder were mixed together for 30 minutes by a Henschel mixer. After that, the resultant mixed powder was placed in a reactor oven that atmosphere controll was possible. An operation for replacement of the atmosphere in the oven by a hydrogen gas after evacuation of the reactor oven, was repeated twice, and thereafter, the hydrogen gas was allowed to flow into the reactor oven at a flow rate of 0.1 L/min at room temperature (in terms of 0°C). Under this condition, temperature was increased to 8 varieties of temperatures: 200°C, 210°C, 220°C, 230°C, 240°C, 250°C, 260°C, and 270°C, (hereinafter sometimes called reaction temperatures), and, held for 3 hours while maintaining the temperature and subjected to a reaction process to yield the reaction-processed powder.

Fig. 2 shows a TEM (Transmission Electron Microscope) photograph of the reaction-processed powder (at a reaction temperature of 250°C).

A pulverization process was performed, type by type, on 8 types of the reaction-processed powder subjected to the reaction process at the respective temperatures. In the pulverization process, (a reaction batch of) the reaction-processed powder and 1 kg of a 10-mmΦ zirconia ball were charged into a planetary ball mill (puluerisette 5 available from FRITSCH GmbH), and the process was performed for 30 minutes to pulverize the powder and thereby obtain specimens 1 to 8 of Example 1.

Crystal analysis was performed on the specimens 1 to 8 by an X-ray diffractometer (hereinafter, XRD,RAD-rX available from Rigaku Corporation) to examine the specimens 1 to 8 for the state of formation of a chalcogen compound (CuInSe₂) and examine them for the reaction temperature of chalcogenization reaction required for formation of the CuInSe₂ particles.

Fig. 3 is a table showing results of the analysis. At this time, X-ray diffraction was measured under conditions: 50 kV and 100 mA, to determine a value (hereinafter, a peak intensity ratio) obtained by dividing a peak height of the highest peak intensity of a target chalcogen compound (CuInSe₂) by a peak height of the highest peak intensity of other substances. Incidentally, in the present application, some results of the X-ray diffraction show that peaks are observed in the vicinity of 12° and in the vicinity of 22°; however, these peaks can possibly be caused by a material for a measurement stage, and therefore, calculation of the peak intensity ratio was performed without allowing for the peaks. When the peak intensity ratio was equal to or more than 15, it is judged that the target chalcogen compound was obtained with high purity (that is, a single phase of an object was obtained), which is indicated by ○ in Fig. 3. When the peak intensity ratio was equal to or more than 5, it is judged that a substance having a high content of the target chalcogen compound was obtained, which is indicated by Δ in Fig. 3. When the peak intensity ratio was less than 5, it is judged that the content of the target chalcogen compound was low, which is indicated by × in Fig. 3. These evaluation criteria are the same as those for other examples.

From the results of Fig. 3, it has been shown that a reaction temperature of at least 220°C or more is required for synthesis of CuInSe₂ particles having chalcopyrite crystal structures. Also, it has been shown that a reaction temperature of at least 230°C or more is required for synthesis of high-purity CuInSe₂ particles.

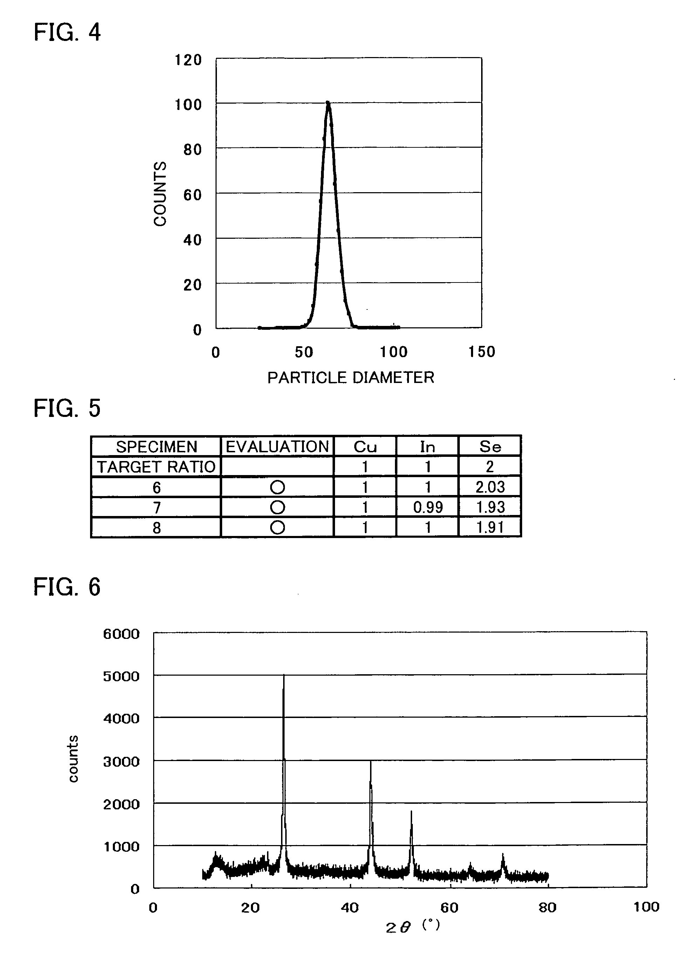

Fig. 4 shows results of particle size distribution obtained by examining the particle diameter of the specimen 6 prepared at a reaction temperature of 250°C by a particle size distribution measuring instrument (NANOPHOX available from Sympatec GmbH) based on dynamic light scattering using laser light. Measurement took place with the specimen dispersed in isopropyl alcohol at a rate of 10 µg/mL. In the present application, the average particle diameter (D50) indicates a value measured by this method. Here, the average particle diameter (D50) is 50% diameter in a volume-base particle size distribution, and refers to particle diameter D (nm) obtained when Q% is equal to 50% on a graph of the volume-base particle size distribution plotted by the particle size distribution measuring instrument, that is, on a cumulative particle size curve plotted between particle diameter D (nm) represented by the axis of abscissas and volume Q (%) at which particles having a particle diameter equal to or less than the particle diameter D (nm) are present, represented by the axis of ordinates.

The average particle diameter (D50) of the specimen 6 was 64 nm (0.064 µm). As a result of making measurements in the same manner, any of the average particle diameters (D50) of the specimens 3 to 5, 7 and 8 fell within the range of 60 nm to 70 nm.

Composition analysis using fluorescent X-rays was performed on the resultant dry powder (the specimens 6, 7 and 8). For X-ray fluorescence analysis, JSX-3201 available from JEOL Ltd. was used for measurement.

Fig. 5 shows results of the analysis, represented as the atomic ratio of constituent elements by normalization, taking Cu as 1. When a deviation of the value of the atomic ratio of each constituent element from a target value fell within 5%, this was judged as "○." Thus, it has been observed that a chalcogen compound having a composition ratio close to a target composition ratio (Cu : In : Se = 1 : 1 : 2) was obtained.

Fig. 6 is a graph showing results of X-ray diffraction of the obtained chalcogen compound (the specimen 6), in which the axis of ordinates indicates peak intensity [cps], and the axis of abscissas indicates diffraction angle (2θ) [°].

### COMPARATIVE EXAMPLE 1

To synthesize CuInSe₂ particles, a solution containing 0.1 mol of copper nitrate and 0.1 mol of indium nitrate dissolved in 500 mL of pure water was poured into a 1000 mL beaker. Subsequently, with the solution in the beaker stirred with a blade of 5 cm in diameter at 300 rpm, 40 g/L of an aqueous solution of sodium hydroxide was dripped until the solution reached pH 7.8, thereby to form a precipitate as a hydroxide and obtain a composite hydroxide of copper and indium. In this state, the composite hydroxide was allowed to stand for 30 minutes, and thereafter, solid-liquid separation was performed by a Nutsche. At this time, extracted cake of the hydroxide of copper and indium was dispersed again in pure water, and the solid-liquid separation was performed by a Nutsche in the same manner. Above-mentioned process was repeated until conductivity of filtrate reached 10⁻³ Sm⁻¹ or less. Part of the cake taken out was dried by heat (at 80°C for 12 hours in an atmosphere of air), and a water content in the cake was determined from mass before and after drying by heat. The obtained water content in the cake was 73% by mass.

Then, 5 g of the composite hydroxide after the drying was taken out. Se powder (having an average particle diameter of 1 µm) in an amount such that an atomic ratio of Se to Cu contained in the composite hydroxide stands at 2.4 was prepared by being weighed.

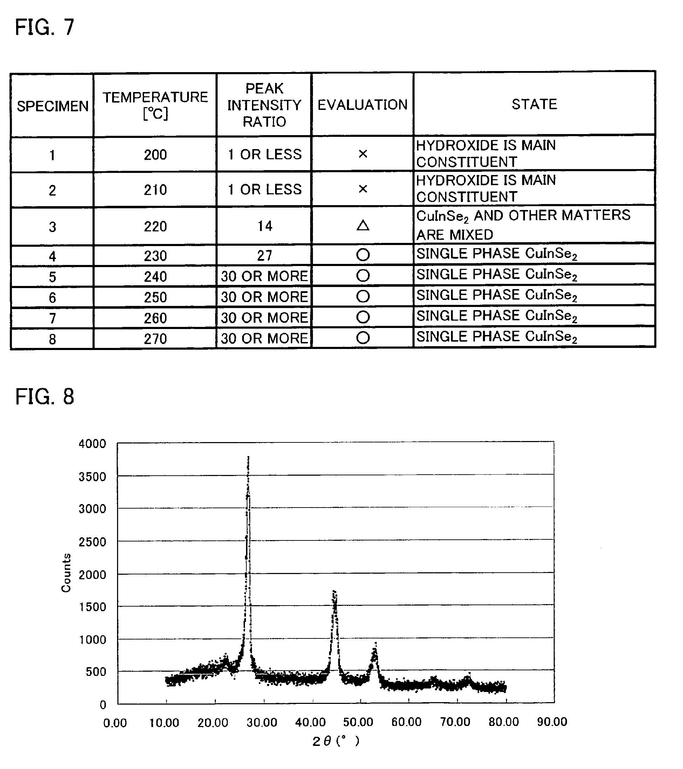

Then, 5 g of the hydroxide and the weighed Se powder were put in a 300 mL separable flask, and 100 mL of tetraethylene glycol was added to them. In this state, a resultant mixture was stirred and underwent reaction (chalcogenization reaction) for 5 hours at 8 varieties of temperatures: 200°C to 270°C, shown in Fig. 7 thereby to yield products in powder form. The following cleaning was repeatedly performed twice on powder obtained by subjecting powder prepared at each of the temperatures to filtration using filter paper.

The cleaning involves adding the obtained powder to 50 mL of ethyl alcohol and stirring a resultant mixture, and then, performing centrifugation under conditions: 3000 rpm and 5 minutes, thereby removing a supernatant liquid.

The cleaned powder was dried at 80°C for 12 hours in an atmosphere of air thereby to yield dry powder (specimens 1 to 8 of Comparative example 1).

Figs. 7 and 8 show results of evaluation performed on the obtained specimens 1 to 8 by the X-ray diffractometer in the same manner as Example 1. Fig. 7 shows results of evaluation of the state of the specimens of Comparative example 1, and Fig. 8 is a graph showing results of X-ray diffraction of chalcogen compound powder of Comparative example 1. Also, as a result of measuring the average particle diameters (D50) of the specimens 4 and 6 by the same method as that in Example 1, any of these average particle diameters were equal to or less than 20 nm.

The specimens 4, 6 and 8 of Example 1 and the specimens 4 and 6 of Comparative example 1 were heated at 140°C for 1 hour in air to eliminate organic matter removable with low-temperature heating, and were then cooled to room temperature, and thereafter, the carbon content in the specimens was evaluated by wavelength dispersive X-ray fluorescence analysis. For evaluation, a wavelength dispersive X-ray fluorescence analysis instrument (S8 TIGER available from Bruker AXS Inc.) was used as an instrument to measure the carbon content in the specimens and calculate the carbon content on a mass percentage basis.

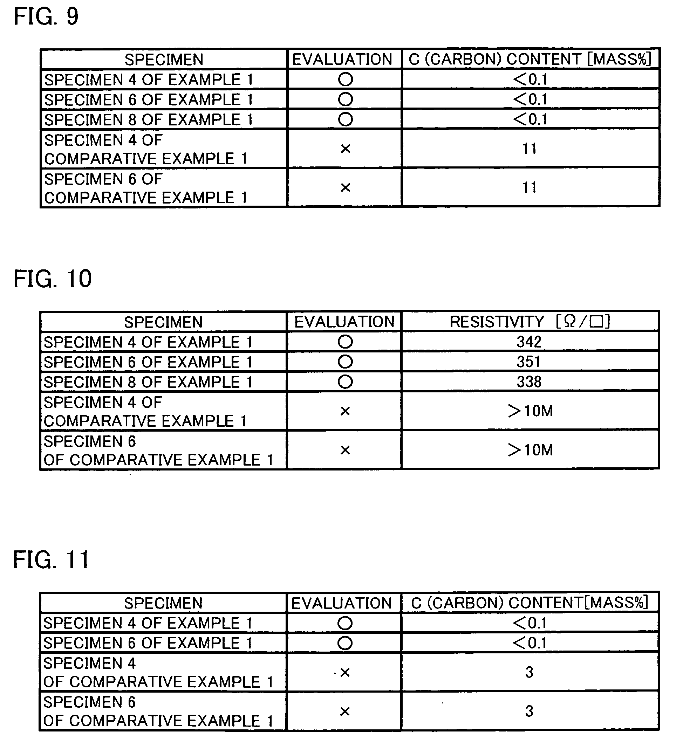

Fig. 9 shows results of this measurement. The specimens of Example 1 had the dramatically reduced content of carbon, as compared to those of Comparative example 1. Thus, as described later, use of the chalcogen compound powder of the embodiment enables formation of a thin film of chalcogen compound having low sheet resistivity.

Then, pastes were prepared using the powders of the specimens 4 and 6 of Example 1 and the specimens 4 and 6 of Comparative example 1, and thin films of chalcogen compound were formed by coating and calcination of the pastes, and electrical conductivity of the films was evaluated by the following method.

For each of the powders of the specimens 4 and 6 of Example 1 and the specimens 4 and 6 of Comparative example 1, the powder and isopropyl alcohol were mixed together for 10 minutes by a stirrer (a planetary ball mill, puluerisette 5 available from FRITSCH GmbH) thereby to prepare chalcogen compound paste, in such a manner that the content of the powder was 50% by mass. A coating of the chalcogen compound paste was applied, by using a bar coater, in a thickness of 10 µm to a substrate having a Mo film formed in a thickness of 1 µm on blue sheet glass, and this coating film was dried at 110°C for 1 hour in the air. The coating film was heated at 250°C for 2 hours in the air. After that, calcination took place at 575°C for 1 hour in an atmosphere of a mixed gas of nitrogen and hydrogen (containing 5% by volume of hydrogen gas) thereby to form a thin film of chalcogen compound (a CuInSe₂ film).

Fig. 10 shows results of measurement of sheet resistivity of the thin films of chalcogen compound, using MCP-T410 available from Mitsubishi Chemical Corporation. When the specimens of Comparative example 1 were used, the sheet resistivity of the thin films of chalcogen compound was equal to or more than 10 MΩ/□ and hence measured values could not be obtained, whereas when the specimens (the specimens 4 and 6) of Example 1 were used, the sheet resistivity of the thin films of chalcogen compound was less than 400 Ω/□. Thin films of chalcogen compound were prepared under the same conditions as described above, except that, at the time of preparation of paste, the content of powder was changed from 50% by mass to 20% by mass, 40% by mass, and 70% by mass, and measured results of sheet resistivity of the thin films were the similar as described above: when the powders of the specimens (the specimens 4 and 6) of Comparative example 1 were used, the sheet resistivity of the films was equal to or more than 10 MΩ/□ and hence measured values could not be obtained, whereas when the powders (the specimens 4 and 6) of Example 1 were used, it was observed that the sheet resistivity of the films was less than 400 Ω/□.

As mentioned previously, the sheet resistivity is desired to be low for the thin film of chalcogen compound for use in the solar cell or the like. Specifically, it is preferable that the sheet resistivity is equal to or less than 500 Ω/□. When the specimens 4 and 6 of Example 1 were used, the sheet resistivity satisfied that it was within the above-mentioned range.

Fig. 11 shows results of evaluation of the carbon content in the thin films of chalcogen compound formed using four specimens, respectively: the specimens 4 and 6 of Example 1 and the specimens 4 and 6 of Comparative example 1, by SEM-EDS. When the thin films of chalcogen compound formed using the specimens of Comparative example 1 were measured for the carbon content, the measured content of carbon was 3% by mass, whereas when the thin films of chalcogen compound formed using the specimens of Example 1 were measured for the carbon content, it was shown that the measured content of carbon was less than 0.1% by mass, which was low. Also, in other words, in the embodiment, there is a low content of carbon in the dry powder (the chalcogen compound powder), and thus, it may be said that a sheet resistance value of the thin film of chalcogen compound using this powder is greatly reduced.

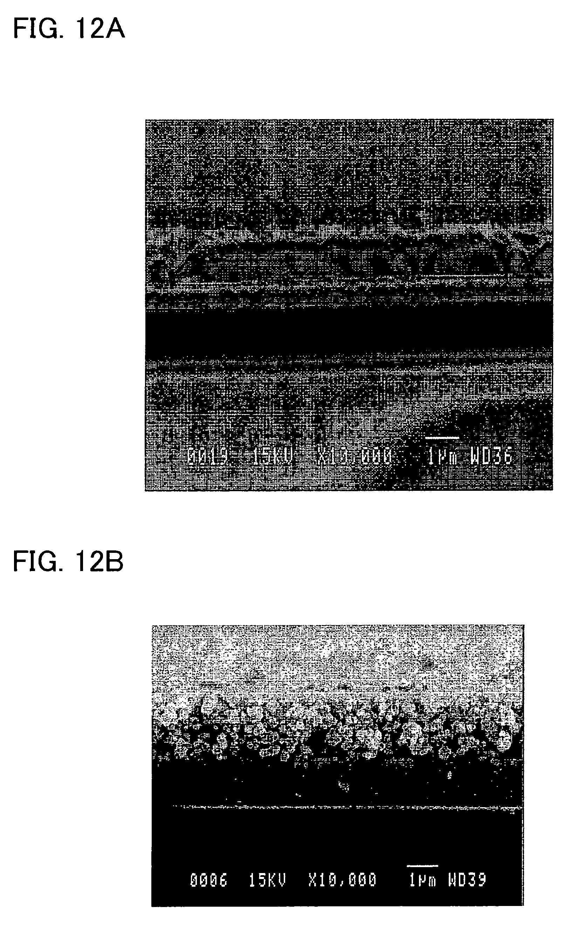

Figs. 12A and 12B show results of observation of cross sections of the thin films of chalcogen compound formed by the above-described method using the specimen 6 of Example 1 (see Fig. 12A) and the specimen 6 of Comparative example 1 (see Fig. 12B), by a SEM. From the results, it has been observed that sintering proceeds in the example, whereas the sintering does not proceed in the comparative example.

### EXAMPLE 2

To synthesize CuInSe_{2.4} particles, chalcogen compound powder was produced in the same manner as Example 1, except that the amount of Se powder added was changed from an amount such that an atomic ratio of Se to Cu stands at 2.4 to an amount such that the atomic ratio stands at 3.0, and that an increase in temperature in a hydrogen gas was changed from 200°C -270°C to 250°C, and evaluation was performed on the chalcogen compound powder in the same manner as Example 1. The average particle diameter (D50) of the obtained chalcogen compound powder was 75 nm (0.075 µm).

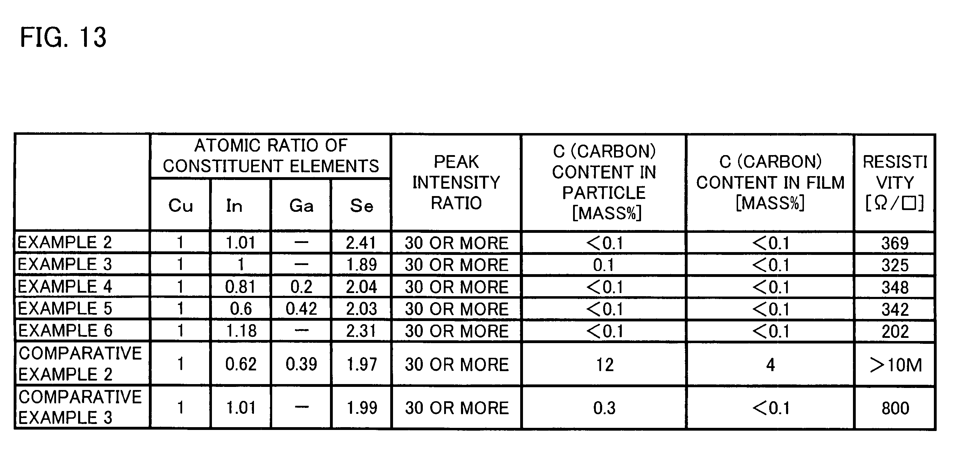

Fig. 13 shows results of chemical composition analysis by fluorescent X-rays, a peak intensity ratio obtained by measurement of X-ray diffraction, results of evaluation of a carbon content in the powder by wavelength dispersive X-ray fluorescence analysis method, results of evaluation of a carbon content in a thin film of chalcogen compound by SEM-EDS, and results of measurement of sheet resistivity of the thin film of chalcogen compound. As a result of observing a cross section of the thin film of chalcogen compound by SEM, the cross section was in the same form as shown in Fig. 12A, and it has been observed that sintering proceeds.

### EXAMPLE 3

To synthesize CuInSe_{1.9} particles, chalcogen compound powder was produced in the same manner as Example 1, except that the amount of Se powder added was changed from an amount such that an atomic ratio of Se to Cu stands at 2.4 to an amount such that the atomic ratio stands at 2.1, and that an increase in temperature in a hydrogen gas was changed from 200°C -270°C to 250°C, and evaluation was performed on the chalcogen compound powder in the same manner as Example 1. The average particle diameter (D50) of the obtained chalcogen compound powder was 100 nm (0.1 µm).

Fig. 13 shows results of composition analysis by fluorescent X-rays, a peak intensity ratio obtained by measurement of X-ray diffraction, results of evaluation of a carbon content in the powder by wavelength dispersive X-ray fluorescence analysis method, results of evaluation of a carbon content in a thin film of chalcogen compound by SEM-EDS, and results of measurement of sheet resistivity of the thin film of chalcogen compound. As a result of observing a cross section of the thin film of chalcogen compound by SEM, the cross section was in the same form as shown in Fig. 12A, and it has been observed that sintering proceeds.

### EXAMPLE 4

To synthesize CuIn_{0.8}Ga_{0.2}Se₂ particles, chalcogen compound powder was produced in the same manner as Example 1, except that 0.1 mol of copper nitrate and 0.1 mol of indium nitrate as raw materials for composite hydroxide powder were changed to 0.1 mol of copper nitrate, 0.08 mol of indium nitrate and 0.02 mol of gallium nitrate, and that an increase in temperature in a hydrogen gas was changed from 200°C -270°C to 250°C, and evaluation was performed on the chalcogen compound powder in the same manner as Example 1. It has been observed that the average primary particle diameter of the composite hydroxide powder is equal to or less than 50 nm. The average particle diameter (D50) of the obtained chalcogen compound powder was 82 nm (0.082 µm).

Fig. 13 shows results of composition analysis by fluorescent X-rays, a peak intensity ratio obtained by measurement of X-ray diffraction, results of evaluation of a carbon content in the powder by wavelength dispersive X-ray fluorescence analysis method, results of evaluation of a carbon content in a thin film of chalcogen compound by SEM-EDS, and results of measurement of sheet resistivity of the thin film of chalcogen compound. As a result of observing a cross section of the thin film of chalcogen compound by SEM, the cross section was in the same form as shown in Fig. 12A, and it has been observed that sintering proceeds.

### EXAMPLE 5

To synthesize CuIn_{0.6}Ga_{0.4}Se₂ particles, chalcogen compound powder was produced in the same manner as Example 1, except that 0.1 mol of copper nitrate and 0.1 mol of indium nitrate as raw materials for composite hydroxide powder were changed to 0.1 mol of copper nitrate, 0.06 mol of indium nitrate and 0.04 mol of gallium nitrate, and that an increase in temperature in a hydrogen gas was changed from 200°C -270°C to 250°C, and evaluation was performed on the chalcogen compound powder in the same manner as Example 1. It has been observed that the average primary particle diameter of the composite hydroxide powder is equal to or less than 50 nm. The average particle diameter (D50) of the obtained chalcogen compound powder was 82 nm (0.082 µm).

Fig. 13 shows results of composition analysis by fluorescent X-rays, a peak intensity ratio obtained by measurement of X-ray diffraction, results of evaluation of a carbon content in the powder by wavelength dispersive X-ray fluorescence analysis method, results of evaluation of a carbon content in a thin film of chalcogen compound by SEM-EDS, and results of measurement of sheet resistivity of the thin film of chalcogen compound. As a result of observing a cross section of the thin film of chalcogen compound by SEM, the cross section was in the same form as shown in Fig. 12A, and it has been observed that sintering proceeds.

### EXAMPLE 6

To synthesize Cu_{0.85}InSe₂ particles, chalcogen compound powder was produced in the same manner as Example 1, except that 0.1 mol of copper nitrate and 0.1 mol of indium nitrate as raw materials for composite hydroxide powder were changed to 0.85 mol of copper nitrate and 0.1 mol of indium nitrate, and that an increase in temperature in a hydrogen gas was changed from 200°C -270°C to 250°C, and evaluation was performed on the chalcogen compound powder in the same manner as Example 1. The average particle diameter (D50) of the obtained chalcogen compound powder was 85 nm (0.085 µm).

Fig. 13 shows results of composition analysis by fluorescent X-rays, a peak intensity ratio obtained by measurement of X-ray diffraction, results of evaluation of a carbon content in the powder by wavelength dispersive X-ray fluorescence analysis method, results of evaluation of a carbon content in a thin film of chalcogen compound by SEM-EDS, and results of measurement of sheet resistivity of the thin film of chalcogen compound. As a result of observing a cross section of the thin film of chalcogen compound by SEM, the cross section was in the same form as shown in Fig. 12A, and it has been observed that sintering proceeds. The composition of the chalcogen compound powder was different from that of Example 1, and the resistance of the thin film of chalcogen compound was lower as compared to that of Example 1.

### EXAMPLE 7

Chalcogen compound powder was produced in the same manner as Example 1, except that a time for a pulverization process performed using a planetary ball mill was changed from 30 minutes to 5 minutes, and that an increase in temperature in a hydrogen gas was changed from 200°C -270°C to 250°C, and evaluation was performed on the chalcogen compound powder in the same manner as Example 1. The average particle diameter (D50) of the obtained chalcogen compound powder was 0.3 µm. As a result of evaluation of a carbon content in the obtained chalcogen compound powder by wavelength dispersive X-ray fluorescence analysis method, the carbon content was less than 0.1% by mass. As a result of evaluation of a carbon content in a thin film of chalcogen compound by SEM-EDS, the carbon content was less than 0.1% by mass. As a result of measurement of sheet resistivity of the thin film of chalcogen compound, the sheet resistivity was 700 Ω/□. As a result of observing a cross section of the thin film of chalcogen compound by SEM, the cross section was in the same form as shown in Fig. 12A, and it has been observed that sintering proceeds.

### COMPARATIVE EXAMPLE 2

To synthesize CuIn_{0.6}Ga_{0.4}Se₂ particles, chalcogen compound powder was produced in the same manner as Comparative example 1, except that 0.1 mol of copper nitrate and 0.1 mol of indium nitrate as raw materials for composite hydroxide powder were changed to 0.1 mol of copper nitrate, 0.06 mol of indium nitrate and 0.04 mol of gallium nitrate, and that heating temperature of chalcogenization reaction was changed from 200°C -270°C to 250°C, and evaluation was performed on the chalcogen compound powder. The average particle diameter (D50) of the obtained chalcogen compound powder was 20 nm (0.02 µm).

Fig. 13 shows results of composition analysis by fluorescent X-rays, a peak intensity ratio obtained by measurement of X-ray diffraction, results of evaluation of a carbon content in the powder by wavelength dispersive X-ray fluorescence analysis method, results of evaluation of a carbon content in a thin film of chalcogen compound by SEM-EDS, and results of measurement of sheet resistivity of the thin film of chalcogen compound. As a result of observing a cross section of the thin film of chalcogen compound by SEM, the cross section was in the same form as shown in Fig. 12B, and it has been observed that sintering does not proceed.

### COMPARATIVE EXAMPLE 3

To synthesize CuInSe₂ particles, a solution containing 0.1 mol of copper nitrate and 0.1 mol of indium nitrate dissolved in 500 mL of pure water was poured into a 1000 mL beaker. Subsequently, with the solution in the beaker stirred with a blade of 5 cm in diameter at 300 rpm, 40 g/L of an aqueous solution of sodium hydroxide was dripped until the solution reached pH 7.8, thereby to form a precipitate as a hydroxide and obtain a composite hydroxide of copper and indium. In this state, the composite hydroxide was allowed to stand for 30 minutes, and thereafter, solid-liquid separation was performed by a Nutsche. At this time, extracted cake of the hydroxide of copper and indium was dispersed again in pure water, and the solid-liquid separation was performed by a Nutsche in the same manner. Above-mentioned process was repeated until conductivity of filtrate reached 10⁻³ Sm⁻¹ or less. Part of the cake taken out was dried by heat (at 80°C for 12 hours in an atmosphere of air), and a water content in the cake was determined from mass before and after drying by heat. The obtained water content in the cake was 73% by mass.

Then, 5 g of the composite hydroxide after the drying was taken out. Se powder in an amount such that an atomic ratio of Se to Cu contained in the composite hydroxide stands at 2.2 was prepared by being weighed. Then, 5 g of the composite hydroxide and the weighed Se powder were put in a 50-mL vessel made of fluorocarbon resin, and 20 mL of ethyl alcohol was added to them. In this state, a resultant mixture was stirred to disperse the hydroxide in the ethyl alcohol. After that, the mixture was put and sealed in a high-pressure vessel (MM-50 available from OM LAB-TECH Co., Ltd.), and, with the sealed state maintained, it underwent reaction (chalcogenization reaction) at 250°C for 5 hours under pressure (that is, under a condition where the boiling point of the solvent was higher than the reaction temperature, the vessel was hermetically sealed, and the temperature was increased) thereby to yield a product in powder form. Cleaning was repeatedly performed twice on powder obtained by subjecting the product to filtration using filter paper.

The cleaning is as follows. The cleaning involves adding the obtained powder to 50 mL of ethyl alcohol and stirring a resultant mixture, and then, performing centrifugation under conditions: 3000 rpm and 5 minutes, thereby removing a supernatant liquid.

The cleaned powder was dried at 80°C for 12 hours in an atmosphere of air thereby to yield chalcogen compound powder.

Evaluation of the chalcogen compound powder and a thin film of chalcogen compound formed using this powder was performed in the same manner as Example 1. The average particle diameter (D50) of the obtained chalcogen compound powder was 45 nm (0.045 µm).

Fig. 13 shows results of chemical composition analysis by fluorescent X-rays, a peak intensity ratio obtained by measurement of X-ray diffraction, results of evaluation of a carbon content in the powder by wavelength dispersive X-ray fluorescence analysis method, results of evaluation of a carbon content in a thin film of chalcogen compound by SEM-EDS, and results of measurement of sheet resistivity of the thin film of chalcogen compound.

Thus, also in the case of Examples 2 to 6, it can be seen that the peak intensity ratio is equal to or more than 30, the carbon content in the chalcogen compound powder and the thin film of chalcogen compound is equal to or less than 0.1% by mass, and the resistance is about 200 Ω/□ to 370 Ω/□.

## Claims

1. Chalcogen compound powder, represented as a general formula: CuₐIn_{b}Ga_{1-b}Se_{c} (where 0.65 ≤ a ≤ 1.2, 0 < b ≤ 1, and 1.9 ≤ c ≤ 2.4), and having an average particle diameter (D50) of from 5 nm inclusive to 0.5 µm exclusive and a carbon content of 0.2% or less by mass.

2. The chalcogen compound powder according to claim 1, wherein the carbon content is less than 0.1% by mass.

3. Chalcogen compound paste comprising the chalcogen compound powder according to claim 1 and a disperse medium.

4. The chalcogen compound paste according to claim 3, wherein the disperse medium is alcohol.

5. The chalcogen compound paste according to claim 4, wherein the content of the chalcogen compound powder in the paste is 20% to 80% inclusive by mass.

6. A process for producing chalcogen compound powder, comprising the steps of:
forming a chalcogen compound in a way that a metal source, containing copper and indium, having an average primary particle diameter of 0.3 µm or less, and one or more kinds selected from a group consisting of selenium and selenium compounds are heated to a temperature of 200°C to 400°C inclusive in a reducing gas; and
pulverizing the chalcogen compound and thereby obtaining chalcogen compound powder represented as a general formula: CuₐIn_{b}Ga_{1-b}Se_{c} (where 0.65 ≤ a ≤ 1.2, 0 < b ≤ 1, and 1.9 ≤ c ≤ 2.4).

7. The process for producing the chalcogen compound powder, according to claim 6, wherein the metal source is metal hydroxide powder.

8. The process for producing chalcogen compound powder, according to claim 6, wherein the metal source is any one of metal oxide powder and a mixture of a metal hydroxide and an oxide.

9. The proc ess for producing chalcogen compound powder, according to any one of claims 7 and 8, wherein the metal source contains gallium.

10. The proc ess for producing chalcogen compound powder, according to any one of claims 7 to 9, wherein the reducing gas is any one of a hydrogen gas and a mixed gas of hydrogen and an inert gas.

11. The process for producing chalcogen compound powder, according to claim 6, wherein heating to 220°C or more takes place in the reducing gas.

12. The proc ess for producing chalcogen compound powder, according to any one of claims 7 to 9, wherein the reducing gas contains selenium hydride.

13. The proc ess for producing chalcogen compound powder, according to any one of claims 7 to 9, wherein the metal source is heated to 220°C or more in the reducing gas containing the selenium hydride.

14. A process for producing chalcogen compound paste, comprising the steps mixing together the chalcogen compound powder according to any one of claims 1 to 5 and a disperse medium.

15. A process for producing a thin film of chalcogen compound, comprising a step of applying, drying and thereafter calcining a coating of the chalcogen compound paste obtained by the process according to claim 14.

## Patentansprüche

1. Chalcogenverbindungspulver, dargestellt als eine allgemeine Formel: CuₐIn_{b}Ga_{1-b}Se_{c} (worin 0,65 ≤ a ≤ 1,2, 0 < b ≤ 1, und 1,9 ≤ c ≤ 2,4), und das einen mittleren Teilchendurchmesser (D50) von einschließlich 5 nm bis 0,5 µm nicht eingeschlossen und einen Kohlenstoffanteil von 0,2 Masse-% oder weniger aufweist.

2. Chalcogenverbindungspulver nach Anspruch 1, wobei der Kohlenstoffanteil weniger als 0,1 Masse-% beträgt.

3. Chalcogenverbindungspaste, umfassend das Chalcogenverbindungspulver nach Anspruch 1 und ein Dispersionsmittel.

4. Chalcogenverbindungspaste nach Anspruch 3, wobei das Dispersionsmittel Alkohol ist.

5. Chalcogenverbindungspaste nach Anspruch 4, wobei der Anteil des Chalcogenverbindungspulvers in der Paste 20 Masse-% bis einschließlich 80 Masse-% beträgt.

6. Verfahren zur Herstellung eines Chalcogenverbindungspulvers, umfassend die Schritte des:
Bildens einer Chalcogenverbindung in einer Art, dass eine Metallquelle, enthaltend Kupfer und Indium, mit einem mittleren Primärteilchendurchmesser von 0,3 µm oder weniger und eine oder mehrere Arten, ausgewählt aus einer Gruppe, bestehend aus Selen und Selenverbindungen, auf eine Temperatur von 200°C bis einschließlich 400°C in einem Reduktionsgas erwärmt werden; und
Zermahlens der Chalcogenverbindung und dadurch Erhaltens eines Chalcogenverbindungspulvers, dargestellt als eine allgemeine Formel: CuₐIn_{b}Ga_{1-b}Se_{c} (worin 0,65 ≤ a ≤ 1,2, 0 < b ≤ 1, und 1,9 ≤ c ≤ 2,4).

7. Verfahren zur Herstellung des Chalcogenverbindungspulvers nach Anspruch 6, wobei die Metallquelle ein Metallhydroxidpulver ist.

8. Verfahren zur Herstellung des Chalcogenverbindungspulvers nach Anspruch 6, wobei die Metallquelle eines aus einem Metalloxidpulver und einem Gemisch aus einem Metallhydroxid und einem Oxid ist.

9. Verfahren zur Herstellung des Chalcogenverbindungspulvers nach einem der Ansprüche 7 und 8, wobei die Metallquelle Gallium enthält.

10. Verfahren zur Herstellung des Chalcogenverbindungspulvers nach einem der Ansprüche 7 bis 9, wobei das Reduktionsgas eines aus einem Wasserstoffgas und einem Mischgas aus Wasserstoff und einem Inertgas ist.

11. Verfahren zur Herstellung des Chalcogenverbindungspulvers nach Anspruch 6, wobei das Erwärmen auf 220°C oder mehr in dem Reduktionsgas stattfindet.

12. Verfahren zur Herstellung des Chalcogenverbindungspulvers nach einem der Ansprüche 7 bis 9, wobei das Reduktionsgas Selenwasserstoff enthält.

13. Verfahren zur Herstellung des Chalcogenverbindungspulvers nach einem der Ansprüche 7 bis 9, wobei die Metallquelle auf 220°C oder mehr in dem Reduktionsgas erwärmt wird, das Selenwasserstoff enthält.

14. Verfahren zur Herstellung einer Chalcogenverbindungspaste, umfassend die Schritte des Zusammenmischens des Chalcogenverbindungspulvers nach einem der Ansprüche 1 bis 5 und eines Dispersionsmittels.

15. Verfahren zur Herstellung eines Dünnfilms einer Chalcogenverbindung, umfassend einen Schritt des Anwendens, des Trocknens und anschließend des Calcinierens einer durch das Verfahren nach Anspruch 14 erhaltenen Beschichtung der Chalcogenverbindungspaste.

## Revendications

1. Poudre de composé chalcogène, représentée par la formule générale : CuₐIn_{b}Ga_{1-b}Se_{c} (où 0,65 ≤ a ≤ 1,2, 0 < b ≤ 1, et 1,9 ≤ c ≤ 2,4) et ayant un diamètre moyen des particules (D50) allant de 5 nm y compris à 0,5 µm non compris et une teneur en carbone de 0,2% ou moins en masse.

2. Poudre de composé chalcogène selon la revendication 1, où la teneur en carbone est inférieure à 0,1% en masse.

3. Pâte de composé chalcogène comprenant la poudre de composé chalcogène selon la revendication 1 et un milieu dispersant.

4. Pâte de composé chalcogène selon la revendication 3, où le milieu dispersant est un alcool.

5. Pâte de composé chalcogène selon la revendication 4, où la teneur en poudre de composé chalcogène dans la pâte se situe dans l'intervalle allant de 20% à 80% y compris, en masse.

6. Procédé de production d'une poudre de composé chalcogène, comprenant les étapes de :
formation d'un composé chalcogène de telle sorte qu'une source métallique, contenant du cuivre et de l'indium, ayant un diamètre moyen des particules de 0,3 µm ou moins, et un ou plusieurs types choisis parmi le groupe consistant en le sélénium et des composés du sélénium sont chauffés à une température allant de 200°C à 400°C y compris dans un gaz réducteur ; et
pulvérisation du composé chalcogène et ainsi, obtention d'une poudre de composé chalcogène représentée par la formule générale : CuₐIn_{b}Ga_{1-b}Se_{c} (où 0,65 ≤ a ≤ 1,2, 0 < b ≤ 1, et 1,9 ≤ c ≤ 2,4).

7. Procédé de production d'une poudre de composé chalcogène, selon la revendication 6, où la source métallique est une poudre d'hydroxyde métallique.

8. Procédé de production d'une poudre de composé chalcogène, selon la revendication 6, où la source métallique est l'un quelconque parmi une poudre d'oxyde métallique et un mélange d'un hydroxyde métallique et d'un oxyde.

9. Procédé de production d'une poudre de composé chalcogène, selon l'une quelconque des revendications 7 et 8, où la source métallique contient du gallium.

10. Procédé de production d'une poudre de composé chalcogène, selon l'une quelconque des revendications 7 à 9, où le gaz réducteur est l'un quelconque parmi l'hydrogène gazeux et un gaz mixte d'hydrogène gazeux et d'un gaz inerte.

11. Procédé de production d'une poudre de composé chalcogène, selon la revendication 6, où le chauffage à 220°C ou plus est réalisé dans le gaz réducteur.

12. Procédé de production d'une poudre de composé chalcogène, selon l'une quelconque des revendications 7 à 9, où le gaz réducteur contient l'hydrure de sélénium.

13. Procédé de production d'une poudre de composé chalcogène, selon l'une quelconque des revendications 7 à 9, où la source métallique est chauffée à 220°C ou plus dans le gaz réducteur contenant l'hydrure de sélénium.

14. Procédé de production d'une pâte de composé chalcogène, comprenant les étapes de mélange de la poudre de composé chalcogène selon l'une quelconque des revendications 1 à 5, et d'un milieu dispersant.

15. Procédé de production d'un film fin de composé chalcogène, comprenant les étapes d'application, de séchage puis de calcination d'un revêtement de la pâte de composé chalcogène obtenue par le procédé selon la revendication 14.
